# EUROPÄISCHE PATENTSCHRIFT

(11) **EP 2 361 714 B1**
(45) Veröffentlichungstag und Bekanntmachung des Hinweises auf die Patenterteilung: **13.05.2015**
(21) Anmeldenummer: 11156144.5
(22) Anmeldetag: 28.02.2011
(51) Int. Cl.: B23K 1/005, B23K 26/073, B23K 26/067

(54) **Verfahren und Anordnung zum Laserlöten**
Method and assembly for laser soldering
Procédé et agencement pour brasage au laser

(30) Priorität: 26.02.2010 DE 102010000564; 23.04.2010 DE 102010016628
(43) Veröffentlichungstag der Anmeldung: 31.08.2011
(73) Patentinhaber: Reis Group Holding GmbH & Co. KG, 63785 Obernburg (DE)
(72) Erfinder: Heinrici, Axel, 52068 Aachen (DE); Ott, Lars-Sören, 52353 Düren (DE)
(74) Vertreter: Stoffregen, Hans-Herbert

(56) Entgegenhaltungen:
- WO-A1-91/14529
- WO-A1-2006/093264
- DE-A1- 10 261 422
- US-A1- 2009 294 412

## Beschreibung

Die Erfindung bezieht sich auf ein Verfahren zum stoffschlüssigen Verbinden eines ersten Materials mit einem zweiten Material mittels Lötens durch auf das erste Material auftreffende fokussierte Laserstrahlung, deren Leistung in Abhängigkeit von durch Wärmestrahlung gemessener Temperatur geregelt wird, die von dem ersten Material in Richtung der Laserstrahlung emittiert wird. Auch nimmt die Erfindung Bezug auf eine Anordnung zum Auflöten eines ersten Materials auf ein zweites Material umfassend eine Laserstrahlung emittierende Laserquelle, eine die Laserstrahlung auf das erste Material fokussierende erste Optik, einen Sensor, der über die erste Optik von dem ersten Material emittierte Wärmestrahlung als Messstrahlung erfasst, einen Strahlteiler, über den die Laserstrahlung aus dem Strahlengang des Messstrahlengangs oder der Messstrahlengang aus dem Strahlengang der Laserstrahlung ablenkbar ist, sowie eine Regelung für die Leitung der Laserstrahlung auf der Basis der Messstrahlung.

Laser, insbesondere fasergekoppelte Laser können zum Weichlöten von Verbindern wie Kupferbändern auf Solarzellen genutzt werden, um diese zu Solarmodulen zu verschalten. Nach dem Stand der Technik wird die Laserstrahlung zunächst kollimiert, mit dem Strahlengang eines Pyrometers kombiniert, um den Sensor des Pyrometers und den Laserspot koaxial auf das Kupferband zu fokussieren. Laser und Pyrometer bilden dabei eine geschlossene Regelschleife. Dabei wird eine zeitlich veränderliche Solltemperatur vorgegeben. Ein Regler verändert die Laserleistung derart, dass die Solltemperatur möglichst gut erreicht wird. Laserspot und Messpunkt für das Pyrometer fallen dabei zusammen. Hierdurch tritt der Nachteil auf, dass die Laserstrahlung die Pyrometermessung beeinflusst und verfälschen kann. So können auf der Oberfläche der Kupferbänder absorbierende oder schlecht wärmeleitende Stoffe eingelagert sein, wie Staub, Flussmittel, Oxide. Somit kann die Laserstrahlung auf der Oberfläche Funken oder andere lokale Wärmequellen erzeugen, die jedoch nicht die Temperatur des Materials selbst wiedergeben. Diese zu Messverfälschungen führenden Einflüsse treten insbesondere im Temperaturbereich des Weichlötens auf, da hochempfindliche Pyrometer für niedrige Temperaturen zum Einsatz gelangen.

Ein gattungsbildendes Verfahren ist der DE-A-100 64 487 zu entnehmen. Um die Leistung des Laserstrahls zu regeln, wird die Temperatur im Auftreffpunkt des Lasers auf der Lötstelle berührungslos gemessen. Hierzu ist in der Laserstrahlquelle ein Strahlungspyrometer integriert.

Gegenstand der DE-A-10 2004 050 164 ist ein Schweißverfahren mittels Laserstrahlung. Um die eingetragene Energiemenge zur Regelung der Leistung der Laserstrahlung zu messen, wird mittels eines Pyrometers auf der der Schweißstelle gegenüberliegenden Seite des zu verschweißenden Materials die Temperatur gemessen.

Aus der EP-A-1 477 258 sind eine Vorrichtung und ein Verfahren zur lokalen Temperaturbehandlung mit Wärmedetektor und Bildverarbeitung bekannt. Dabei wird die Temperatur im Auftreffpunkt der Laserstrahlung auf einen Gegenstand mittels eines Pyrometers gemessen. Die zu messende Wärmestrahlung wird als Rückstrahlung aus der Laserstrahlung ausgekoppelt.

Die WO-A-2006/093264 bezieht sich auf eine Anordnung zum stoffschlüssigen Verbinden von Materialien. Dabei wird die Temperatur im Bereich von zu verbindenden Materialien sowohl innerhalb als auch außerhalb des Auftreffpunkts der Laserstrahlung auf die Materialien gemessen.

Die DE-A-102 61 422 bezieht sich auf ein Laserschweiß- und -lötverfahren, wobei mittels eines Linsensystems Laserstrahlung in zwei getrennt fokussierbare Teillaserstrahlen aufgeteilt wird.

Bei einer entsprechenden Anordnung zum Löten wird nach der US-A-200/294412 ein Laserstrahl ringförmig abgebildet.

Der vorliegenden Erfindung liegt die Aufgabe zu Grunde, ein Verfahren und eine Anordnung der eingangs genannten Art so weiterzubilden, dass insbesondere Oberflächeneigenschaften des ersten Materials oder auf dem ersten Material befindliche materialfremde Stoffe nicht zu einer merklichen Verfälschung der zu messenden Materialtemperatur führen, so dass ein reproduzierbares, eine hohe Güte aufweisendes Löten ermöglicht wird.

Zur Lösung der Erfindung wird vorgeschlagen, dass die Wärmestrahlung zur Regelung der Leistung der fokussierten Laserstrahlung in einem Bereich des ersten Materials gemessen wird, der benachbart und räumlich getrennt zu dem Bereich liegt, auf dem die fokussierte Laserstrahlung auf das erste Material auftrifft.

Erfindungsgemäß liegt der Bereich, auf dem die Laserstrahlung auftrifft, räumlich getrennt, also beabstandet zu dem Bereich, in dem die Temperatur gemessen wird. Es liegen folglich der Bereich der Temperaturmessung und der Bereich der auftreffenden Laserstrahlung im Bereich der Lötstelle, aber innerhalb dieses Bereichs räumlich getrennt, also beabstandet.

Insbesondere ist vorgesehen, dass die Laserstrahlung in zumindest zwei zueinander beabstandeten Foki auf dem ersten Material abgebildet wird und dass von dem Sensor Wärmestrahlung als die Messstrahlung erfasst wird, die vom zwischen den Foki verlaufenden Bereich des ersten Materials emittiert wird.

Auch besteht die Möglichkeit, dass die Laserstrahlung in einem ringförmig verlaufenden Fokusbereich auf dem ersten Material abgebildet wird und dass Wärmestrahlung des ersten Materials als die Messstrahlung gemessen wird, die innerhalb des ringförmigen Fokusbereichs emittiert wird.

Die Erfindung wird auch dann nicht verlassen, wenn nicht die Laserstrahlung, sondern wenn die einem ringförmigen Bereich des ersten Materials emittierte Wärmestrahlung gemessen wird, die koaxial einen auf das erste Material abgebildeten Fokus der Laserstrahlung umgibt, bzw. die Laserstrahlung in einem Fokus auf dem ersten Material abgebildet wird und in zwei vorzugsweise diametral zum Fokus verlaufenden Bereichen des ersten Materials emittierte Wärmestrahlung als die Messstrahlung gemessen wird.

Zur Aufspaltung der Laserstrahlung bzw. der Zusammenführung der Wärmestrahlung, also im eigentlichen Sinne der Abbildung des Sensors auf das erste Material, wird ein refraktives optisches Element, wie Dachprisma oder Axicon, oder ein diffraktives optisches Element oder ein reflektierendes optisches Element benutzt.

Zwar ist es bekannt, in der refraktiven Augenchirurgie eine Laserstrahlung mittels Strahlteilereinrichtung in mehrere Foki aufzuteilen. Hierzu soll die Behandlungszeit reduziert werden (DE-A-10 2007 019 812).

Aus der EP-A-1 020 249 ist es bekannt, mittels Laserstrahlen Metalle zu schneiden und zu schweißen. Dabei besteht die Möglichkeit, einen Doppelspot zu erzeugen, um einen Zusatzdraht beim Schweißen oder das Zuführen von Gas im Bereich der Spots zu ermöglichen.

Erfindungsgemäß erfolgt bevorzugterweise eine Aufspaltung der Laserstrahlung derart, dass zumindest zwei Foki auf dem aufzulötenden Material abgebildet werden. Dabei handelt es sich im eigentlichen Sinne um Fokusbereiche oder Spots. Insoweit sind die Begriffe als Synonyme zu verstehen. Die Eigenschaften der Oberfläche des Materials beeinflussenden Stoffe wie Staub, Flussmittel und/oder Oxide können zu einer Verfälschung der gemessenen Temperatur des Materials selbst nicht mehr führen, da nicht im Spot selbst, sondern neben dem Spot gemessen wird.

Um eine überaus genaue Messung der Temperatur des Materials im Bereich der Spots durchzuführen, wird unmittelbar neben diesen, vorzugsweise zwischen zwei Spots, die Wärmestrahlung gemessen. Andere Geometrien für den Fokusbereich und das Messen der Temperatur im Bereich des Laserspots bzw. der -spots sind gleichfalls möglich, wobei mittels des Sensors Wärmestrahlung als Messstrahlung erfasst wird, die außerhalb des bzw. der Spots emittiert wird.

Aufgrund der erfindungsgemäßen Lehre kann die als Regelgröße benutzte Solltemperatur reduziert werden. Die eingebrachte Laserleistung bleibt auf gleichem Niveau, wobei diese von Bauteil zu Bauteil weniger schwankt. Wird dagegen die Temperatur im Laserspot gemessen, muss die Solltemperatur so hoch eingestellt werden, dass das Bauteil trotz einer eventuellen Verfälschung des Sensorsignals hin zu scheinbar höheren Temperaturen ausreichend mit Laserleistung beaufschlagt wird. Die Verfälschungen schwanken dabei stark auf einer realen Bauteiloberfläche. Dies führt zu Prozessschwankungen.

Mit der erfindungsgemäßen Lehre wird in einer geschlossenen Regelschleife ein Auflöten eines ersten Materials auf ein zweites Material, insbesondere eines elektrischen Verbinders wie Kupferband auf ein Halbleiterbauelement wie Solarzelle bei einer im Vergleich zum Stand der Technik geringerer Solltemperatur als Regelgröße ermöglicht, wobei jedoch sichergestellt ist, dass eine zu Beschädigungen führende unzulässig hohe Erwärmung unterbleibt. Außerdem ergeben sich überaus reproduzierbare Lötergebnisse.

Insbesondere ist vorgesehen, dass die Laserstrahlung derart auf zwei Laserspots aufgeteilt und fokussiert wird, dass Mittelabstand A zwischen zwei Foki beträgt 1,0 mm ≤ A ≤ 2,5 mm bei einem jeweiligen Fokusdurchmesser D mit 0,5 mm ≤ D ≤ 1,5 mm unter Einhaltung eines von den Foki unbedeckten Bereichs auf dem ersten Material, von dem emittierte Wärmestrahlung als die Messstrahlung gemessen wird.

Eine Anordnung der eingangs genannten Art zeichnet sich zum einen dadurch aus, dass zwischen der Laserquelle und dem Strahlteiler eine die Laserstrahlung aufspaltende zweite Optik angeordnet ist, die die Laserstrahlung auf dem ersten Material in zumindest zwei zueinander beabstandeten Foki oder in einem ringförmigen Fokusbereich abbildet, wobei ein die zu messende Wärmestrahlung emittierender Bereich des ersten Materials räumlich getrennt zu der abgebildeten Laserstrahlung zwischen den zumindest zwei Foki oder innerhalb des ringförmigen Fokusbereichs verläuft. Zum anderen zeichnet sich die Anordnung dadurch aus, dass zwischen dem Sensor und dem Strahlteiler eine zweite Optik angeordnet ist, über die von zwei zueinander beabstandeten Bereichen des ersten Materials emittierte Strahlung oder von einem ringförmigen Bereich emittierte Strahlung als die Messstrahlung auf den Sensor abbildbar ist. Dabei ist die Laserstrahlung in dem Bereich zwischen den zwei Bereichen oder dem ringförmigen Bereich abbildbar, die bzw. der die zu messende Strahlung emittieren bzw. emittiert.

Insbesondere ist vorgesehen, dass das erste Material ein elektrischer Verbinder und das zweite Material ein Halbleiterbauelement wie Solarzelle ist.

Insbesondere ist die zum Einsatz gelangende zweite Optik derart ausgelegt, dass zwei Foki auf dem ersten Material mit einem Mittenabstand A zwischen 1,0 mm ≤ A ≤ 2,5 mm und einem jeweiligen Fokusdurchmesser D mit 0,5 mm ≤ D ≤ 1,5 mm unter Einhaltung eines von den Foki unbedeckten Bereichs auf dem ersten Material abbildbar sind. Dabei ist insbesondere die zweite Optik ein refraktives optisches Element, wie Dachprisma oder Axicon, oder ein diffraktives optisches Element oder ein reflektierendes optisches Element. Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Fig. 1: einen ersten Laserstrahlengang,
- Fig. 2: einen dem ersten Laserstrahlengang zugeordneten Messstrahlengang,
- Fig. 3: einen zweiten Laserstrahlengang,
- Fig. 4: einen dem zweiten Laserstrahlengang zugeordneten Messstrahlengang,
- Fig. 5: Darstellungen von zwei mit einer diffraktiven Optik erzeugten Laserspots und
- Fig. 6: einen mit einem Axicon erzeugten ringförmig verlaufenden Laserspot.

Nachstehend wird die erfindungsgemäße Lehre anhand des Auflötens eines Kupferbands auf eine Solarzelle zum Verschalten zu einem Solarmodul beschrieben, ohne dass hierdurch die erfindungsgemäße Lehre eingeschränkt werden soll. Vielmehr ist die erfindungsgemäße Lehre überall dort anwendbar, wo Fügepartner mittels Laserstrahlung stoffschlüssig miteinander verbunden werden sollen.

Bei den verwendeten Elementen wie Laser, Pyrometer zur Messung der Wärmestrahlung im Lötbereich sowie den zur nachstehend beschriebenen Strahlaufteilung verwendeten Optiken handelt es sich um Handelsprodukte, die einem Durchschnittsfachmann auf dem Gebiet des Weichlötens mittels fasergekoppeltem Laser bekannt sind, so dass es weiterer Erläuterungen nicht bedarf.

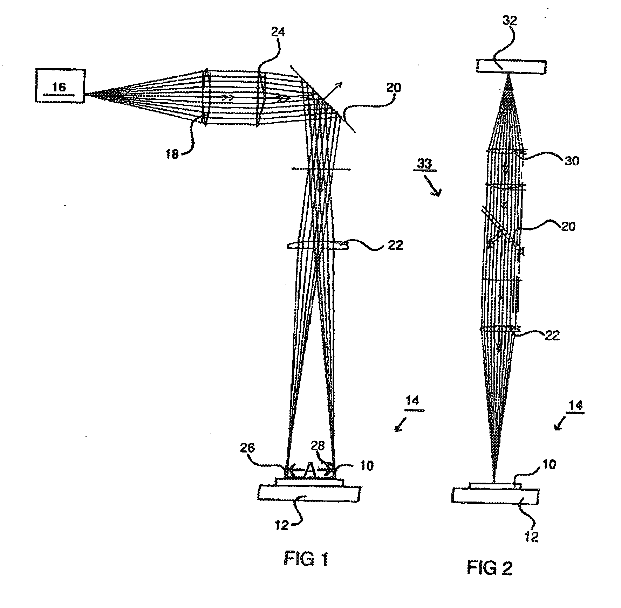

In den Fig. 1 bis 4, in denen für gleiche Elemente gleiche Bezugszeichen verwendet werden, sind Laser- und Pyrometerstrahlengänge rein prinzipiell dargestellt, um in einem Regelprozess die Temperatur in einer Lötstelle auf eine gewünschte Temperatur einzustellen. Regelgröße dabei ist eine vorgegebene von den Materialien der stoffschlüssig zu verbindenden Bauteile abhängige Solltemperatur.

Erwähntermaßen wird die Erfindung anhand des Auflötens eines Leiters wie Kupferband auf eine Solarzelle 12 erläutert. Ein entsprechender Verbinder 10 dient zur Verschaltung von Solarzellen zu einem Modul.

Entsprechend dem Stand der Technik werden Pyrometerstrahlengang und Laserstrahlengang vor der Lötstelle 14 koaxial zueinander ausgerichtet, gleichwenn hierdurch die erfindungsgemäße Lehre nicht zwingend eingeschränkt werden soll.

Aus Gründen der Vereinfachung der Darstellung werden für die verschiedenen Ausführungsformen Laserstrahlengang und Pyrometerstrahlengang getrennt dargestellt. Die Koaxialität ergibt sich dann, wenn die Darstellungen übereinander gelegt werden.

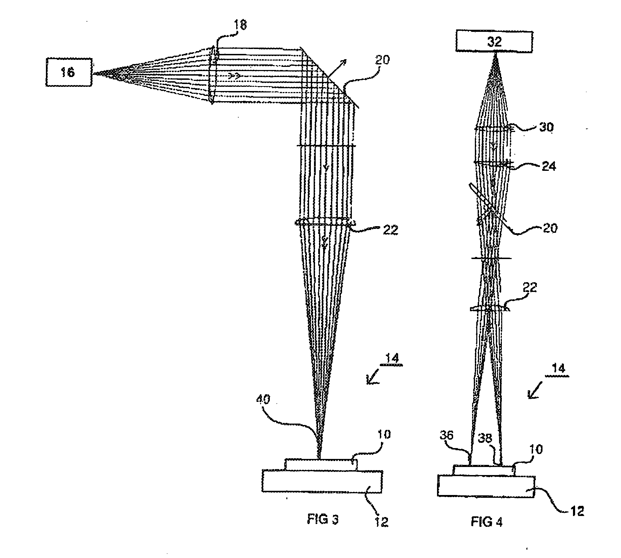

Die Laserstrahlung wird über insbesondere einen fasergekoppelten Laser 16 erzeugt. In dem Strahlengang sowohl der Fig. 1 und 3 sind sodann eine Kollimatoroptik 18, ein Strahlteiler 20 sowie eine Fokussieroptik 22 angeordnet.

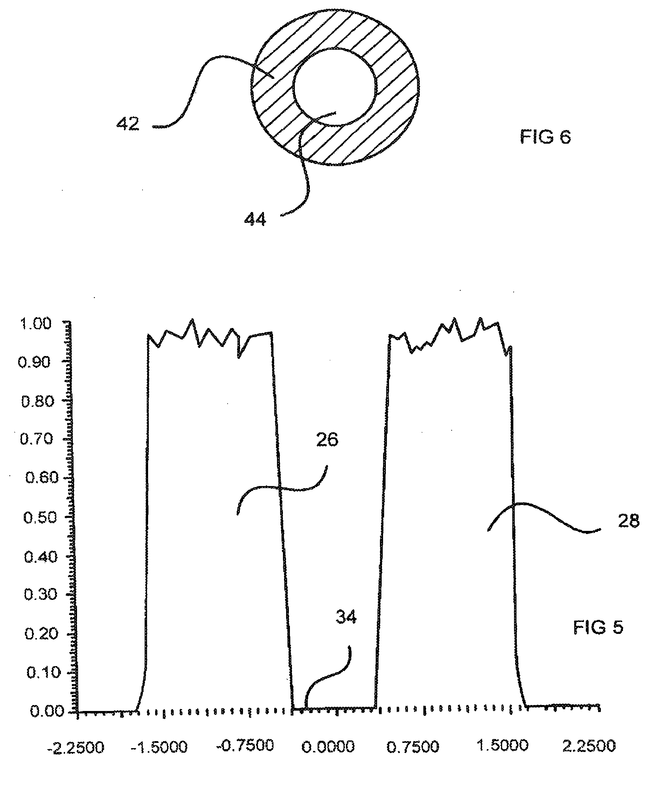

Des Weiteren ist gemäß Fig. 1 zwischen der Kollimatoroptik 18 und dem Strahlteiler 20 ein refraktives optisches Element 24 insbesondere in Form eines Dachprismas oder eines Axicons angeordnet, um entsprechend der Fig. 1 und 5 die Laserstrahlung derart aufzuspalten, dass auf dem Verbinder 10 zwei zueinander beabstandete Foki 26, 28 abgebildet werden, die im eigentlichen Sinne Spots sind, also eine flächige Erstreckung aufweisen. Dabei kann der wirksame Durchmesser eines jeden Spots zwischen 0,6 mm und 1,5 mm, vorzugsweise im Bereich von 1,2 mm liegen. Der Abstand A der Mittelpunkte der Spots 26, 28 sollte im Bereich zwischen 1,5 mm und 2,5 mm liegen, wobei der Abstand A derart zu wählen ist, dass sich die Laserspots nicht überschneiden, also zwischen diesen wirksamen Laserspots 26, 28 ein von diesen nicht abgedeckter Bereich des Verbinders 10 vorhanden ist. In diesem Bereich wird erfindungsgemäß nach dem Ausführungsbeispiel der Fig. 1, 2 und 5 die Temperatur des Verbinders 10 gemessen. Zur Ermittlung der Temperatur wird die Wärmestrahlung über die Fokussieroptik 22 und den Strahlteiler 20 und eine Kollimatoroptik 30 auf den Sensor eines Pyrometers 32 abgebildet.

In der zeichnerischen Darstellung der Fig. 2 und 4 ist die Strahlrichtung derart einge-zeichnet, als wenn der Sensor des Pyrometers 32 auf den Verbinder 10 abgebildet wird. Die Umkehrbarkeit des Strahlenwegs ist möglich, da es physikalisch das Gleiche ist, ob die Optiken die Wärmestrahlung des Verbinders 10 auf den Sensor des Pyrometers 32 oder den Sensor auf den Verbinder 10 abbilden. Zeichnerisch ist die Abbildung des Sensors auf den Verbinder 10 dargestellt, so dass die Strahlrichtung entsprechend der der Laserstrahlung eingezeichnet ist.

Wie ein Vergleich der Fig. 1 und 2 verdeutlicht, geht die Messstrahlung 33 von einem Bereich der Lötstelle 14 aus, der zwischen den Laserspots liegt, so dass Verfälschungen der gemessenen Temperatur durch die Laserstrahlung beeinflussende Oberflächeneigenschaften des Verbinders 10 ausgeschlossen werden. Funken oder andere lokale Wärmequellen, die aufgrund z. B. von Staub, Flussmittel, Oxiden oder Oberflächenstrukturen zu Verfälschungen führen, bleiben bei der Ermittlung der Temperatur des Verbinders 10 im Bereich der Lötstelle 14 unberücksichtigt. Somit schwankt die in Abhängigkeit von der gemessenen Temperatur zu regelnde Leistung des Lasers 16 im Vergleich zu den Verfahren weniger, in denen unmittelbar im Laserspot gemessen wird. Infolgedessen können überaus reproduzierbare stoffschlüssige Verbindungen hergestellt werden. Gleichzeitig wird eine unzulässige Erwärmung der zu verbindenden Bauteile und diese Bauteile umgebenden Materialien vermieden.

Anhand der Fig. 5 wird rein prinzipiell verdeutlicht, dass mit einem Dachprisma als refraktives optisches Element 24 die Möglichkeit besteht, dass zwei Laserspots geringen nominalen Durchmessers und bei geringem Abstand zueinander auf einen Lötbereich abgebildet werden können. Zwischen den Laserspots wird sodann die Temperatur mittels des Pyrometers gemessen. Der entsprechende Bereich ist in der Fig. 5 mit 34 gekennzeichnet. Dabei verläuft der Temperaturmessbereich beabstandet zu den Spots, aber innerhalb des Bereichs der Lötstelle 14.

Das Ausführungsbeispiel der Fig. 3 und 4 unterscheidet sich von den Fig. 1 und 2 dahingehend, dass nicht die Laserstrahlung mittels des refraktiven optischen Elements 24 aufgespalten wird, sondern der Pyrometerstrahlengang, also von zwei zueinander beabstandeten Bereichen die Temperatur der Lötstelle 14 gemessen wird. Die entsprechenden Messpunkte sind in der Fig. 1 mit den Bezugszeichen 36, 38 gekennzeichnet. Zwischen den Messpunkten 36, 38 trifft der fokussierte Laserstrahl auf den Verbinder 10 auf. Der entsprechende Laserspot ist in Fig. 3 mit dem Bezugszeichen 40 versehen. Damit ein Aufspalten des Pyrometerstrahls bzw. Zusammenfügen der von den Messpunkten 36, 38 emittierten Wärmestrahlung erfolgt, wird entsprechend der Fig. 4 zwischen dem Strahlteiler 20 und der Kollimatoroptik 30 ein refraktives optisches Element in Form eines Dachprismas oder Axicons angeordnet, das dem der Fig. 1 entspricht und daher mit dem Bezugszeichen 24 versehen ist.

Es besteht jedoch auch die Möglichkeit, die Laserstrahlung oder die Pyrometerstrahlung mittels eines diffraktiven optischen Elementes in Form eines Axicons derart aufzuspalten, dass sich im Falle der Laserstrahlung ein ringförmiger Laserspot ergibt, wie dieser der Fig. 6 rein prinzipiell zu entnehmen ist. Wird die Lötstelle 14 mit einem entsprechenden ringförmigen Laserspot 42 beaufschlagt, so wird als Messpunkt für die Temperaturbestimmung der Lötbereich innerhalb des ringförmigen Laserspots 42 gemessen, der in Fig. 6 mit dem Bezugszeichen 44 gekennzeichnet ist.

Mittels einer entsprechenden Optik lassen sich Ringgeometrien mit einem Außendurchmesser von 1,5 mm bis 4,0 mm und Innendurchmesser im Bereich zwischen 0,5 mm und 1,0 mm erzeugen. Diese Abmessungen ermöglichen ein sicheres Erfassen der Temperatur innerhalb des ringförmigen Laserspots 42, ohne dass Oberflächeneigenschaften des Verbinders 10 die Messungen verfälschen.

Ist die erfindungsgemäße Lehre anhand von zwei Spots und einem Messpunkt, der zwischen den Spots im Bereich der Lötstelle 14 verläuft, bzw. zwei Messpunkten und einem Laserspot, der zwischen den Messpunkten im Bereich der Lötstelle 14 abgebildet wird, bzw. durch eine Ringgeometrie von Laserspot bzw. Messbereich erläutert worden, so wird hierdurch die erfindungsgemäße Lehre nicht eingeschränkt. Vielmehr können mehr als zwei Laserspots bzw. Messpunkte durch Einsatz einer entsprechend geeigneten Optik benutzt werden, um aufgrund der gemessenen Temperaturen die Laserleistung derart zu regeln, dass gute Lötergebnisse erzielbar sind, ohne zu hohe Leistungen einregeln zu müssen.

Die Temperatur wird in der Lötstelle 14 bzw. bzw. deren Bereich gemessen, in dem das stoffschlüssige Verbinden zwischen den Fügepartnern mittels der Laserstrahlung erfolgt.

Die Erfindung wurde im Ausführungsbeispiel anhand des Auflötens eines Kupferbandes auf eine Solarzelle beschrieben. Hierdurch wird die Erfindung nicht eingeschränkt. Beispielhaft ist ferner das Auflöten von verzinnten Kupferbändern auf andere verzinnte Kupferbänder zu nennen.

Zusammenfassend bezieht sich die Erfindung auf ein Verfahren und eine Anordnung zum stoffschlüssigen Verbinden eines ersten Materials mit einem zweiten Material mittels Lötens durch auf das erste Material auftreffende fokussierte Laserstrahlung, deren Leistung in Abhängigkeit von im Bereich der auftreffenden Laserstrahlung gemessener Temperatur geregelt wird. Damit insbesondere Oberflächeneigenschaften nicht zu einer merklichen Verfälschung der zu messenden Materialtemperatur führen, so dass ein reproduzierbares, eine hohe Güte aufweisendes Löten ermöglicht wird, ist vorgesehen, dass die Temperatur in einem Bereich des ersten Materials gemessen wird, der zu demjenigen benachbart ist, auf dem die fokussierte Laserstrahlung auf das erste Material auftrifft, wobei der Bereich, in dem die Temperatur gemessen wird, und der Auftreffbereich der Laserstrahlung im Bereich der Lötstelle liegen.

### Bezugszeichenliste

### Verfahren und Anordnung zum stoffschlüssigen Verbinden von Materialien

- 10: Verbinder
- 12: Solarzelle
- 14: Lötstelle
- 16: Laser
- 18: Kollimatoroptik
- 20: Strahlteiler
- 22: Fokussieroptik
- 24: refraktives optisches Element
- 26: Fokus
- 28: Fokus
- 30: Kollimatoroptik
- 32: Pyrometer
- 33: Messstrahlung
- 36: Messpunkt
- 38: Messpunkt
- 40: Laserspot
- 42: Laserspot
- 44: Lötbereich

## Patentansprüche

1. Verfahren zum stoffschlüssigen Verbinden eines ersten Materials (10) mit einem zweiten Material (12) mittels Lötens durch auf das erste Material auftreffende fokussierte Laserstrahlung, deren Leistung in Abhängigkeit von durch Wärmestrahlung gemessener Temperatur geregelt wird, die von dem ersten Material in Richtung der Laserstrahlung emittiert wird,
**dadurch gekennzeichnet,**
**dass** die Wärmestrahlung zur Regelung der Leistung der fokussierten Laserstrahlung in einem Bereich (14) des ersten Materials (10) gemessen wird, der benachbart und räumlich getrennt zu dem Bereich liegt, auf dem die fokussierte Laserstrahlung auf das erste Material auftrifft.

2. Verfahren nach Anspruch 1, wobei zur Messung der Temperatur ein Wärmestrahlung messender Sensor (32) verwendet wird, dessen Messstrahlengang vor Auftreffen auf das erste Material (10) parallel oder koaxial zu dem Laserstrahlengang verläuft,
**dadurch gekennzeichnet,**
**dass** die Laserstrahlung in zumindest zwei zueinander beabstandeten Foki (26, 28) auf dem ersten Material (10) abgebildet wird und dass von dem Sensor (32) Wärmestrahlung als die Messstrahlung erfasst wird, die vom zwischen den Foki verlaufenden Bereich des ersten Materials emittiert wird.

3. Verfahren nach Anspruch 1,
**dadurch gekennzeichnet,**
**dass** die von einem ringförmigen Bereich des ersten Materials (10) emittierte Wärmestrahlung als die Messstrahlung erfasst wird, die koaxial einen auf das erste Material abgebildeten Fokus der Laserstrahlung umgibt.

4. Verfahren nach Anspruch 1,
**dadurch gekennzeichnet,**
**dass** die Laserstrahlung in einem Fokus auf dem ersten Material (10) abgebildet wird und dass in zumindest zwei vorzugsweise diametral zu dem Fokus verlaufenden Bereichen des ersten Materials emittierte Wärmestrahlung als die Messstrahlung gemessen wird.

5. Verfahren nach Anspruch 1,
**dadurch gekennzeichnet,**
**dass** die Laserstrahlung in einem ringförmig verlaufenden Fokusbereich (42) auf dem ersten Material (10) abgebildet wird und dass Wärmestrahlung des ersten Materials als die Messstrahlung gemessen wird, die innerhalb des ringförmigen Fokusbereichs emittiert wird.

6. Verfahren nach Anspruch 1 oder 2,
**dadurch gekennzeichnet,**
**dass** die Laserstrahlung oder die Messstrahlung über ein refraktives optisches Element (24), wie Dachprisma oder Axicon, oder ein diffraktives optisches Element oder ein reflektierendes optisches Element aufgeteilt wird.

7. Verfahren nach Anspruch 1 oder 2,
**dadurch gekennzeichnet,**
**dass** in den Messstrahlengang des Sensors ein Strahlteiler (20) angeordnet wird, der zum einen von der Messstrahlung durchsetzt wird und zum anderen die Laserstrahlung ablenkt oder umgekehrt.

8. Verfahren nach Anspruch 2,
**dadurch gekennzeichnet,**
**dass** die Laserstrahlung derart aufgeteilt und fokussiert wird, dass Mittelabstand A zwischen zwei Foki (26, 28) beträgt 1,0 mm ≤ A ≤ 2,5 mm bei einem jeweiligen Fokusdurchmesser D mit 0;5 mm ≤ D ≤ 1,5 mm unter Einhaltung eines von den Foki unbedeckten Bereichs auf dem ersten Material (10), von dem emittierte Wärmestrahlung als die Messstrahlung gemessen wird.

9. Verfahren nach Anspruch 1,
**dadurch gekennzeichnet,**
**dass** als erstes Material (10) ein Verbinder wie Kupferband und als zweites Material (12) ein Halbleiterbauelement wie eine Solarzelle verwendet werden.

10. Anordnung zum Auflöten eines ersten Materials (10) auf ein zweites Material (12) umfassend eine Laserstrahlung emittierende Laserquelle (16), eine die Laserstrahlung auf das erste Material fokussierende erste Optik (18, 22), einen Sensor (32), der über die erste Optik von dem ersten Material emittierte Wärmestrahlung als Messstrahlung erfasst, einen Strahlteiler (20), über den die Laserstrahlung aus dem Strahlengang des Messstrahlengangs oder die Messstrahlung aus dem Strahlengang der Laserstrahlung ablenkbar ist, sowie eine Regelung für die Leistung der Laserstrahlung auf der Basis der Messstrahlung,
**dadurch gekennzeichnet,**
**dass** zwischen der Laserquelle (16) und dem Strahlteiler (20) eine die Laserstrahlung aufspaltende zweite Optik (24) angeordnet ist, die die Laserstrahlung auf dem ersten Material in zumindest zwei zueinander beabstandeten Foki (26, 28) oder in einem ringförmigen Fokusbereich (42) abbildet, wobei ein die zu messende Wärmestrahlung emittierender Bereich des ersten Materials (10) räumlich getrennt zu der abgebildeten Laserstrahlung zwischen den zumindest zwei Foki oder innerhalb des ringförmigen Fokusbereichs verläuft.

11. Anordnung zum Auflöten eines ersten Materials (10) auf ein zweites Material (12) umfassend eine Laserstrahlung emittierende Laserquelle (16), eine die Laserstrahlung auf das erste Material fokussierende erste Optik (18, 22), einen Sensor (32),
der über die erste Optik von dem ersten Material emittierte Wärmestrahlung als Messstrahlung erfasst, sowie einen Strahlteiler (20), über den die Laserstrahlung aus dem Strahlengang des Messstrahlengangs oder die Messstrahlung aus dem Strahlengang der Laserstrahlung ablenkbar ist,
**dadurch gekennzeichnet,**
**dass** zwischen dem Sensor (32) und dem Strahlteiler (20) eine zweite Optik (24) angeordnet ist, über die von zwei zueinander beabstandeten Bereichen (36, 38) des ersten Materials emittierte Strahlung oder von einem ringförmigen Bereich emittierte Strahlung als die Messstrahlung auf den Sensor abbildbar ist, wobei die Laserstrahlung zwischen den zwei Bereichen oder innerhalb des ringförmigen Bereichs abbildbar ist.

12. Anordnung nach Anspruch 10 oder 11,
**dadurch gekennzeichnet,**
**dass** das erste Material ein elektrischer Verbinder (10) und das zweite Material ein Halbleiterbauelement (12) wie Solarzelle ist.

13. Anordnung nach Anspruch 10 oder 11,
**dadurch gekennzeichnet,**
**dass** mittels der zweiten Optik (24) zwei Foki (26, 28) auf dem ersten Material (10) mit einem Mittenabstand A zwischen 1,0 mm ≤ A ≤ 2,5 mm und einem jeweiligen Fokusdumhmesser D mit 0,5 mm ≤ D ≤ 1,5 mm unter Einhaltung eines von den Foki unbedeckten Bereichs auf dem ersten Material abbildbar sind, oder dass mittels der Optik ein ringförmiger Fokusbereich mit einem Außendurchmesser zwischen 1,5 mm und 4,0 mm und einem Innendurchmesser zwischen 0,5 mm und 1,0 mm auf dem ersten Material abbildbar ist.

14. Anordnung nach Anspruch 11,
**dadurch gekennzeichnet,**
**dass** die zweite Optik (24) ein refraktives optisches Element, insbesondere ein Dachprisma oder ein Axicon, oder ein diffraktives optisches Element oder ein reflektierendes optisches Element ist.

## Claims

1. Method for a firm bonding of a first material (10) with a second material (12) by means of soldering through focused laser radiation impacting on the first material, the output of the laser radiation is controlled in dependence of the temperature measured through heat radiation emitted by the first material in the direction of the laser radiation,
**characterized in that**
the heat radiation for the control of the output of the focused laser radiation is measured in an area (14) of the first material (10) which is adjacent to and spaced apart from the area on which the focused laser radiation impacts on the first material.

2. Method according to claim 1, with a heat-measuring sensor (32) being used to measure the temperature whose measuring beam path prior to the impact on the first material (10) runs parallel to or coaxially with the laser beam path,
**characterized in that**
the laser radiation is projected onto the first material (10) in at least two foci (26, 28) located at a distance from each other and that heat radiation is registered by the sensor (32) as the measuring radiation that is emitted by the area of the first material running between the foci.

3. Method according to claim 1,
**characterized in that**
the heat radiation emitted by a ring-shaped area of the first material (10) is registered as the measuring radiation that envelops coaxially a focus of the laser radiation projected onto the first material.

4. Method according to claim 1,
**characterized in that**
the laser radiation is projected in a focus on the first material (10) and that emitted heat radiation is measured as the measuring radiation in at least two areas of the first material, preferably running diametrically to the focus.

5. Method according to claim 1,
**characterized in that**
the laser radiation is projected onto the first material (10) in a focus area (42) running in the shape of a ring and that heat radiation of the first material is measured as the measuring radiation that is emitted within the ring-shaped focus area.

6. Method according to claim 1 or 2,
**characterized in that**
the laser radiation or the measuring radiation is split via a refractive optical element (24), such as an Amici prism or an axicon, or via a diffractive optical element or via a reflecting optical element.

7. Method according to claim 1 or 2,
**characterized in that**
a beam splitter (20) is arranged in the measuring beam path of the sensor which is, on the one hand, penetrated by the measuring radiation and that, on the other hand, deflects the laser radiation, or vice versa.

8. Method according to claim 2,
**characterized in that**
the laser radiation is split and focused in such a way that center to center distance A between two foci (26, 28) is 1.0 mm ≤ A ≤ 2.5 mm with in each case a focus diameter D with 0.5 mm ≤ D ≤ 1.5 mm while maintaining an area uncovered by the foci on the first material (10) from which emitted heat radiation is measured as the measuring radiation.

9. Method according to claim 1,
**characterized in that**
a connector, such as a copper strip, is used as first material (10) and a semiconductor component, such as a solar cell, as second material (12).

10. Arrangement for soldering a first material (10) onto a second material (12), comprising a laser source (16) emitting laser radiation; a first optics (18, 22) focusing the laser radiation on the first material; a sensor (32) that registers heat radiation emitted by the first material as measuring radiation via the first optics, a beam splitter (20) via which the laser radiation from the beam path of the measuring beam path or the measuring radiation from the beam path of the laser radiation can be deflected, as well as a control for the output of the laser radiation on the basis of the measuring radiation,
**characterized in that**
a second optics (24) splitting the laser radiation is arranged between the laser source (16) and the beam splitter (20), the second optics projects the laser radiation onto the first material in at least two foci (26, 28) located at a distance from each other or in a ring-shaped focus area (42), whereby an area of the first material (10) emitting the heat radiation to be measured runs spaced apart from the emitted laser radiation and between the at least two foci or within the ring-shaped focus area.

11. Arrangement for soldering a first material (10) onto a second material (12), comprising a laser source (16) emitting laser radiation; a first optics (18, 22) focusing the laser radiation on the first material; a sensor (32) that registers heat radiation emitted by the first material as measuring radiation via the first optics; as well as a beam splitter (20) via which the laser radiation from the beam path of the measuring beam path or the measuring radiation from the beam path of the laser radiation can be deflected,
**characterized in that**
between the sensor (32) and the beam splitter (20) a second optics (24) is arranged via which the radiation emitted by two areas (36, 38) of the first material located at a distance from each other or by a ring-shaped area is projectable onto the sensor as the measuring
radiation, with the laser radiation being projectable between the two areas or within the ring-shaped area.

12. Arrangement according to claim 10 or 11,
**characterized in that**
the first material is an electrical connector (10) and the second material is a semiconductor component (12), such as a solar cell.

13. Arrangement according to claim 10 or 11,
**characterized in that**
that two foci (26, 28) on the first material (10) having a center to center distance A of between 1.0 mm ≤ A ≤ 2.5 mm and a respective focus diameter D of 0.5 mm ≤ D ≤ 1.5 mm are projectable by means of the second optics (24) while maintaining an area uncovered by the foci, or that a ring-shaped focus area with an exterior diameter of between 1.5 mm and 4.0 mm and an interior diameter of between 0.5 mm and 1.0 mm is projectable onto the first material.

14. Arrangement according to claim 11,
**characterized in that**
the second optics (24) is a refractive optical element, in particular an Amici prism or an axicon, or a diffractive optical element or a reflecting optical element.

## Revendications

1. Procédé destiné à relier par liaison de matière un premier matériau (10) avec un second matériau (12) par brasage au moyen d'un rayonnement laser focalisé incident sur le premier matériau et dont la puissance est régulée en fonction de la température mesurée par le rayonnement thermique qui est émis par le premier matériau en direction du rayonnement laser,
**caractérisé en ce**
**que** le rayonnement thermique destiné à réguler la puissance du rayonnement laser focalisé est mesuré dans une zone (14) du premier matériau (10) voisine et séparée dans l'espace de la zone sur laquelle le rayonnement laser focalisé rencontre le premier matériau.

2. Procédé selon la revendication 1, dans lequel pour mesurer la température est utilisé un capteur de mesure (32) mesurant un rayonnement thermique et dont la trajectoire du rayonnement de mesure s'étend parallèlement ou coaxialement à la trajectoire du rayonnement laser avant de rencontrer le premier matériau (10),
**caractérisé en ce**
**que** le rayonnement laser est reproduit sur le premier matériau (10) dans au moins deux foyers (26, 28) distants l'un de l'autre, et que le rayonnement thermique est saisi par le capteur (32) en tant que rayonnement de mesure émis par la zone du premier matériau s'étendant entre les foyers.

3. Procédé selon la revendication 1,
**caractérisé en ce**
**que** le rayonnement thermique émis par une zone annulaire du premier matériau (10) est saisi en tant que rayonnement de mesure qui entoure coaxialement un foyer du rayonnement laser reproduit sur le premier matériau.

4. Procédé selon la revendication 1,
**caractérisé en ce**
**que** le rayonnement laser est reproduit dans un foyer sur le premier matériau (10), et que le rayonnement thermique émis dans au moins deux zones du premier matériau s'étendant de préférence diamétralement au foyer est mesuré en tant que rayonnement de mesure.

5. Procédé selon la revendication 1,
**caractérisé en ce**
**que** le rayonnement laser est reproduit dans une zone focale annulaire (42) sur le premier matériau (10), et que le rayonnement thermique du premier matériau est mesuré en tant que rayonnement de mesure émis à l'intérieur de la zone focale annulaire.

6. Procédé selon la revendication 1 ou 2,
**caractérisé en ce**
**que** le rayonnement laser ou le rayonnement de mesure est divisé par un élément optique réfracteur (24), tel qu'un prisme en toit ou un axicon, ou par un élément optique diffracteur ou un élément optique réfléchissant.

7. Procédé selon la revendication 1 ou 2,
**caractérisé en ce**
**que** dans la trajectoire du rayonnement de mesure du capteur est disposé un diviseur de faisceau (20) qui d'une part est traversé par le rayonnement de mesure et d'autre part diffracte le rayonnement laser, ou inversement.

8. Procédé selon la revendication 2,
**caractérisé en ce**
**que** le rayonnement laser est divisé et focalisé de manière telle que la distance moyenne A entre deux foyers (26, 28) est telle que 1,0 mm ≤ A ≤ 2,5 mm pour un diamètre de foyer respectif D tel que 0,5 mm ≤ D ≤ 1,5 mm, en respectant une zone non recouverte par les foyers sur le premier matériau (10), zone dont
le rayonnement thermique émis est mesuré en tant que rayonnement de mesure.

9. Procédé selon la revendication 1,
**caractérisé en ce**
**qu'**en tant que premier matériau (10) est utilisé un connecteur tel qu'une bande de cuivre, et qu'en tant que second matériau (12) est utilisé un composant à semi-conducteurs tel qu'une cellule solaire.

10. Dispositif destiné à braser un premier matériau (10) sur un second matériau (12), comprenant une source laser (16) émettant un rayonnement laser, un premier moyen optique (18, 22) focalisant le rayonnement laser sur le premier matériau, un capteur (32) qui, par l'intermédiaire du premier moyen optique, saisit en tant que rayonnement de mesure le rayonnement thermique émis par le premier matériau, un diviseur de faisceau (20) par lequel le rayonnement laser peut être diffracté hors de la trajectoire du faisceau du rayonnement de mesure ou le rayonnement de mesure peut être diffracté hors de la trajectoire du faisceau du rayonnement laser, ainsi qu'un dispositif de régulation pour la puissance du rayonnement laser sur la base du rayonnement de mesure,
**caractérisé en ce**
**qu'**entre la source laser (16) et le diviseur de faisceau (20) est disposé un second moyen optique (24) divisant le rayonnement laser, et qui reproduit le rayonnement laser sur le premier matériau dans au moins deux foyers (26, 28) distants l'un de l'autre, ou dans une zone focale annulaire (42), sachant qu'une zone du premier matériau (10) émettant le rayonnement thermique à mesurer est séparée dans l'espace du rayonnement laser reproduit et s'étend entre les au moins deux foyers ou à l'intérieur de la zone focale annulaire.

11. Dispositif destiné à braser un premier matériau (10) sur un second matériau (12), comprenant une source laser (16) émettant un rayonnement laser, un premier moyen optique (18, 22) focalisant le rayonnement laser sur le premier matériau, un capteur (32) qui, par l'intermédiaire du premier moyen optique,
saisit en tant que rayonnement de mesure le rayonnement thermique émis par le premier matériau, ainsi qu'un diviseur de faisceau (20) par lequel le rayonnement laser peut être diffracté hors de la trajectoire du faisceau du rayonnement de mesure ou le rayonnement de mesure peut être diffracté hors de la trajectoire du faisceau du rayonnement laser,
**caractérisé en ce**
**qu'**entre le capteur (32) et le diviseur de faisceau (20) est disposé un second moyen optique (24) par lequel le rayonnement émis par deux zones (36, 38) du premier matériau distantes l'une de l'autre ou le rayonnement émis par une zone annulaire est reproductible sur le capteur en tant que rayonnement de mesure, le rayonnement laser étant reproductible entre les deux zones ou à l'intérieur de la zone annulaire.

12. Dispositif selon la revendication 10 ou 11,
**caractérisé en ce**
**que** le premier matériau est un connecteur électrique (10) et le second matériau est un composant à semi-conducteurs (12) tel qu'une cellule solaire.

13. Dispositif selon la revendication 10 ou 11,
**caractérisé en ce**
**que** par le second moyen optique (24) sont reproductibles sur le premier matériau (10) deux foyers (26, 28) avec une distance moyenne A telle que 1,0 mm ≤ A ≤ 2,5 mm et un diamètre de foyer respectif D tel que 0,5 mm ≤ D ≤ 1,5 mm, en respectant une zone non recouverte par les foyers sur le premier matériau, ou que par le moyen optique est reproductible sur le premier matériau une zone focale annulaire présentant un diamètre extérieur compris entre 1,5 mm et 4,0 mm et un diamètre intérieur compris entre 0,5 mm et 1,0 mm.

14. Dispositif selon la revendication 11,
**caractérisé en ce**
**que** le second moyen optique (24) est un élément optique réfracteur, en particulier un prisme en toit ou un axicon, ou un élément optique diffracteur ou un élément optique réfléchissant.
